# EUROPEAN PATENT APPLICATION

(11) **EP 4 846 837 A1**
(43) Date of publication of application: **02.12.2026**
(21) Application number: 25179580.3
(22) Date of filing: 28.05.2025
(51) Int. Cl.: A01G 7/04

(54) **SYSTEMS AND METHODS FOR MONITORING PHOTOSYNTHETIC EFFICIENCY AND OPTIMIZE GROWTH OF PLANTS**

(71) Applicant: Signify Holding B.V., 5656 AE Eindhoven (NL); Wageningen University, 6708 PB Wageningen (NL)
(72) Inventor: MOMONT, Hadrien Eric Guillaume, 6701 AK Wageningen (NL); VIALET-CHABRAND, Silvère Roger Michel, 3911 PE Rhenen (NL); KRIJN, Marcellinus Petrus Carolus Michael, 5656 AE Eindhoven (NL); NICOLE, Celine Catherine Sarah, 5656 AE Eindhoven (NL); DE BEER, Esther, 5656 AE Eindhoven (NL)
(74) Representative: Verweij, Petronella Daniëlle

(57) **Abstract**

Disclosed is a method and system for determining a value of an index, qL', indicative of a photosynthetic efficiency of a plant, the method comprising the steps of: (a) determining a dark-adapted ground chlorophyll fluorescence, Fo, of the plant; (b) determining a steady-state chlorophyll fluorescence, Fs, of the plant; (c) determining, during a measurement period, a light-adapted ground chlorophyll fluorescence, Fo', of the plant; and (d) determining the value of the index, qL', indicative of the photosynthetic efficiency of the plant based on the dark-adapted ground chlorophyll fluorescence, Fo, the steady-state chlorophyll fluorescence, Fs, and the light-adapted ground chlorophyll fluorescence, Fo'.

## Description

### FIELD OF THE INVENTION

This disclosure relates to system and methods for monitoring photosynthetic efficiency in plants and optimize growth of plants.

### BACKGROUND OF THE INVENTION

Monitoring plant responses in controlled environment agriculture, such as (semi-)closed environments like greenhouses or vertical farm (aka city farms or plant factories), can identify the plant's needs in terms of actinic light, temperature, CO₂ concentration, irrigation and/or nutrition for improving its performance and can therewith improve the sustainability of the growing system.

Energy use is considerable in controlled environment agriculture; the use of electricity by the artificial lighting in greenhouses and vertical farms constitutes a significant cost and environmental impact. To enhance the efficiency of the actinic light offered to plants, it is crucial to comprehend how plants utilize the provided actinic light.

The overall efficiency of converting photon energy into biomass of the plants is influenced by the nature of photosynthetic reactions. When photosynthetic pigments absorb photons, the energy from these photons is either used for photosynthesis, dissipated as heat, or re-emitted as fluorescence. An excess of absorbed photons can harm the chloroplasts, i.e., the plant cell organs that convert photon energy into chemical energy via the photosynthetic process. Important in this process are the photo-system II (PSII) reaction centers. These centers are susceptible to light-induced damage (photoinhibition), reducing the quantum yield of PSII. Plants have evolved to safely dissipate excess light energy as heat and minimize photoinhibition.

It is well-known that chlorophyll fluorescence measurements allow a quick and reliable determination of the photosynthetic efficiency, denoted Φ_{PSII} (the quantum yield of PSII: a number between 0 and 1). A decrease in Φ_{PSII} indicates increased heat dissipation or photoinhibition. Multiplying Φ_{PSII} with the PPFD (photosynthetic photon flux density) of the actinic light, gives a quantity that is proportional to the actual photosynthetic rate (the rate of CO₂ assimilation). The photosynthetic rate in its turn is proportional to biomass increase. In other words, (i) from fluorescence measurements, Φ_{PSII} can be determined, and (ii) from the combination of Φ_{PSII} and PPFD, the light-use-efficiency (LUE) can be determined. The LUE is typically expressed in grams of biomass obtained per mole of photons offered to the plants. A change in irradiation from actinic light, temperature or CO₂ concentration, shows a direct effect on the photosynthetic rate, which makes measuring of Φ_{PSII} ideal for monitoring the LUE.

Typically, for determining Φ_{PSII}, two measurements are done. In a first measurement, the chlorophyll fluorescence Fs is measured under normal steady lighting conditions. In a second measurement, the maximal fluorescence Fm' is measured during application of a saturating light pulse. Then, Φ_{PSII} is obtained from the formula Φ_{PSII} = 1 - (Fs/Fm'). The prime (') denotes light-adapted conditions (without prime, dark-adapted conditions are implied).

While chlorophyll fluorescence is ideal for determining Φ_{PSII}, it involves measuring the fluorescence at saturating light conditions. This requires application of a saturating light pulse with photon flux densities typically in the range 5000 - 10000 µmol/m²/s. Such high flux densities can be easily produced locally, at the leaf level, but not over larger areas. As a result, to be affordable, chlorophyll fluorometers are typically leaf clip instruments that can only measure locally. Due to the rather invasive nature of these instruments, they cannot measure unattended for prolonged periods of time since they hamper the development of the leaf. There are imaging fluorometers on the market that can measure in a non-invasive mode (i.e., remotely and non-contact) across larger areas for prolonged times. However, these instruments are prohibitively expensive.

In light of the above, there is a need in the art for a low-cost system and method for assessing the photosynthetic efficiency across large areas without the need for applying saturating light conditions.

### SUMMARY OF THE INVENTION

Monitoring plant responses in controlled environment agriculture can identify the plant's needs to improve its performance and the sustainability of the growing system by manipulating the climate. While chlorophyll fluorescence is ideal for such a task, its reliance on saturating light pulses restricts its application to small-scale or specialized and expensive platforms. Utilizing chlorophyll fluorescence parameters measured without saturating light pulses, the inventors developed a novel index proportional to the fraction of open reaction centers. A significant linear relationship was identified between the new index and the traditional calculation for estimating the fraction of open reaction centers. The inventors demonstrated that the new index can be used as a robust proxy for photosynthesis efficiency and implemented in a new imaging device to simultaneously capture the photosynthesis efficiency of several plants.

The invention is defined by a method for determining a value of an index, qL', indicative of a photosynthetic efficiency of a plant, according to claim 1; a method of maximizing light use efficiency of actinic light applied to a plant, according to claim 11; and a system for determining a value of an index, qL', representative of a photosynthetic efficiency of a plant, according to claim 14.

A first aspect disclosed herein provides a method for determining a value of an index, qL', indicative of a photosynthetic efficiency of a plant, the method comprising the steps of: (a) determining a dark-adapted ground chlorophyll fluorescence, Fo, of the plant; (b) determining a steady-state chlorophyll fluorescence, Fs, of the plant; (c) determining, during a measurement period, a light-adapted ground chlorophyll fluorescence, Fo', of the plant; and (d) determining the value of the index, qL', indicative of the photosynthetic efficiency of the plant based on the dark-adapted ground chlorophyll fluorescence, Fo, the steady-state chlorophyll fluorescence, Fs, and the light-adapted ground chlorophyll fluorescence, Fo'.

In preferred embodiment, step of determining the light-adapted ground chlorophyll fluorescence, Fo', of the plant further comprises controlling a far-red lighting device to irradiate the plant with far-red light immediately prior to or at a start of the measurement period and controlling the far-red lighting device to stop irradiating the plant with far-red light after an initial period in the measurement period.

In another or further preferred embodiment, the step of determining the dark-adapted ground chlorophyll fluorescence, Fo, of the plant comprises capturing a first chlorophyll fluorescence image of the plant under dark-adapted plant conditions and determining the dark-adapted ground chlorophyll fluorescence, Fo, of the plant based on the first chlorophyll fluorescence image; the step of determining the steady-state chlorophyll fluorescence, Fs, of the plant comprises controlling an actinic lighting device to irradiate the plant with actinic light, capturing a second chlorophyll fluorescence image of the plant under light-adapted plant conditions, and determining the steady-state chlorophyll fluorescence, Fs, of the plant based on the second chlorophyll fluorescence image; and the step of determining the light-adapted ground chlorophyll fluorescence, Fo', of the plant comprises controlling the actinic lighting device to stop irradiating the plant with actinic light at the start of the measurement period, capturing a third chlorophyll fluorescence image under dark plant conditions at an end of the measurement period and determine the light-adapted ground fluorescence, Fo', for the plant based on the third chlorophyll fluorescence image.

A duration of the measurement period may be between 2 and 30 seconds, preferably between 5 and 10 seconds, preferably about 7 seconds.

The initial period in the measurement period may be less than half the duration of the measurement period, preferably about 3 seconds.

A photosynthetic photon flux density of the actinic light may be in a range from 50 to 1500 µmol/m²/s and is selected to provide growth of the plant.

A photosynthetic photon flux density of the far-red light may be in a range from 10 to 50 µmol/m²/s, preferably about 25 µmol/m²/s, and is selected to provide opening of PSII reaction centers in the plant.

The dark-adapted plant conditions may be conditions wherein the plant is maintained in darkness for at least 30 minutes, and wherein the light-adapted plant conditions may be conditions wherein the plant is maintained under actinic light conditions for at least 10 minutes, preferably at least 30 minutes.

The value of the index, qL', indicative of a photosynthetic efficiency of the plant is determined based on the formula ((Fs-Fo')/(Fs*Fo'))*Fo.

The method may further comprise determining a further value of the index, qL', indicative of a further photosynthetic efficiency of the plant at a further time by repeating, at or around the further time, the steps of determining a steady-state chlorophyll fluorescence, Fs, of the plant, determining a light-adapted ground chlorophyll fluorescence, Fo', of the plant, and determining a value of the index, qL', indicative of a photosynthetic efficiency of the plant.

Another aspect discloses herein provides a method of maximizing light use efficiency of actinic light applied to a plant, the method comprising the steps of: using the method of claim 10 to determine a time series of values of the index, qL'(t), indicative of a photosynthetic efficiency of the plant, at different times t during a diurnal period; determining a time series of photosynthetic photon flux densities, PPFD(t), of the actinic light at the respective different times t during the diurnal period; calculating the integral of (1-qL'(t))*PPDF(t)*dt over the diurnal period; maximizing the integral for a next diurnal period by adapting the photosynthetic photon flux density of actinic light during the next diurnal period.

In an embodiment thereof the step of maximizing the integral may be constrained by the integral of photosynthetic photon flux density of actinic light during the next diurnal period being equal to a predefined daily light integral DLI.

In another of further embodiment thereof, the step of maximizing the integral comprises linearizing the integral with the formula PPFD(t) = PPFD₀ + c*(qL'₀ - qL'(t)), wherein PPDF₀ and qL'₀ are the mean values of PPFD(t) and qL'(t) over a preceding period such as a preceding hour or a preceding diurnal period.

According to further aspect disclosed herein, a system for determining a value of an index, qL', representative of a photosynthetic efficiency of a plant, is provided. The system comprises: (a) an imaging device adapted to capture images of chlorophyll fluorescence from the plant; (b) an actinic lighting device adapted to irradiate the plant with actinic light; and (c) a data processing system in communication with the imaging device and the actinic lighting device, the data processing system comprising a processor configured to: (i) determine a dark-adapted ground fluorescence, Fo, for the plant based on a chlorophyll fluorescence image received from the imaging device and captured under dark-adapted plant conditions; (ii) control the actinic lighting device to irradiate the plant with actinic light; (iii) determine a steady-state fluorescence, Fs, for the plant based on a chlorophyll fluorescence image received from the imaging device and captured under light-adapted plant conditions; (iv) control the actinic lighting device to stop irradiating the plant with actinic light at the start of a measurement period; (v) determine a light-adapted ground fluorescence, Fo', for the plant based on a chlorophyll fluorescence image received from the imaging device and captured at an end of the measurement period under dark plant conditions; and (vi) determine the value of the index, qL', representative of the photosynthetic efficiency of the plant based on the dark-adapted ground fluorescence, Fo, the steady-state fluorescence, Fs, and the light-adapted ground fluorescence, Fo'.

In an embodiment, the system may further comprise a far-red lighting device adapted to irradiate the plant with far-red light, the processor further configured to control the far-red lighting device to irradiate the plant with far-red light immediately prior to or at the start of the measurement period and stop irradiating the plant with far-red light after an initial period in the measurement period.

In an embodiment, the imaging device may be a monochrome camera configured to capture chlorophyll fluorescence wavelengths emitted by the plant.

In an embodiment, the system may further comprise a controller for controlling a photosynthetic photon flux density and a spectral composition of the actinic lighting device and of the far-red lighting device; and wherein the processor is adapted to control the actinic lighting device and the far-red lighting device by providing control commands to the controller.

In an embodiment, the imaging device, the actinic lighting device and the far-red lighting device may be integrated in a luminaire for irradiating the plant.

Disclosed is also a computer-implemented method for determining a value of an index, qL', indicative of a photosynthetic efficiency of a plant, the computer-implemented method comprising the steps of: (a) determining a dark-adapted ground chlorophyll fluorescence, Fo, of the plant; (b) determining a steady-state chlorophyll fluorescence, Fs, of the plant; (c) determining, during a measurement period, a light-adapted ground chlorophyll fluorescence, Fo', of the plant; and (d) determining the value of the index, qL', indicative of the photosynthetic efficiency of the plant based on the dark-adapted ground chlorophyll fluorescence, Fo, the steady-state chlorophyll fluorescence, Fs, and the light-adapted ground chlorophyll fluorescence, Fo'. Such computer-implemented methods may be performed by a data processing system as described above. Thus, a system for determining a value of an index, qL', representative of a photosynthetic efficiency of a plant, as described herein, may comprise a data processing system adapted to execute the computer-implemented invention.

Disclosed is also a computer program (product) comprising software code, when executed by a data processing system as described herein, is configured to execute any of the methods disclosed herein. Further disclosed is a non-transitory computer-readable storage medium, such as a local or cloud storage as disclosed herein, for storing the computer program (product) disclosed above. Alternatively, a computer readable signal medium is disclosed including a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program or software code for use by or in connection with an instruction execution system, apparatus, or device, such as the data processing system disclosed herein.

The term "actinic light" denotes light from solar or other sources that can cause photochemical reactions such as photosynthesis in a species. Actinic light is not limited to so-called PAR light (Photosynthetic Active Radiation) in the wavelength range 400-700 nm but may for example also include far-red light in the wavelength range of 700-800 nm, preferably 700-750 nm.

The term "diurnal period" refers to the daily cycle of light, optionally also temperature and/or CO₂ concentration, that plants experience. This period, which includes both day and night, influences various plant processes, such as photosynthesis, growth, and flowering.

The term "photoperiod" refers to the duration of light exposure within a 24-hour period. It's essentially the length of daylight, or the number of hours of light in a day. This period of time is a key factor in various biological processes, especially in plants, where it can influence flowering, growth, and dormancy.

The term "photosynthetic photon flux density, PPDF" refers to the amount of light within the Photosynthetically Active Radiation (PAR) range (400-700 nm) that reaches a plant's surface area per second. It's measured in micromoles per square meter per second (µmol/m²/s). Essentially, it quantifies how many photons are hitting a specific area, which is crucial for plant growth and photosynthesis. This wavelength range (400-700 nm) is however under debate in the horticulture scientific community. Some (e.g., Bruce Bugbee, https://pubmed.ncbi.nlm.nih.gov/31990071/) argue that wavelengths in the range 700-750 nm are also photosynthetically active and that there seems to be a synergetic effect on photosynthesis between far-red photons and PAR photons. They have introduced a new definition: ePAR (effective PAR) corresponding to a wavelength range 400-750 nm.

The term "light-use-efficiency, LUE" refers to how effectively plants convert absorbed light energy into biomass through photosynthesis. Light-use-efficiency is closely related to biochemical processes involved in photoprotective responses of plant tissues to excess radiation when more solar radiation is absorbed than can be utilized for photosynthesis.

### BRIEF DESCRIPTION OF THE DRAWINGS

Aspects of the invention will be explained in greater detail by reference to exemplary embodiments shown in the drawings, in which:
FIG. 1 illustrates an example measurement protocol for determining qL' according to an embodiment;
FIG. 2 shows typical chlorophyll fluorescence emission spectra for four excitation wavelengths;
FIG. 3 shows an example of a qL' image for a canopy of dwarf tomato plants (left) and qL' values calculated at different intensities of actinic light (right);
FIG. 4 shows a system for determining a value of an index, qL', according to an embodiment; and
FIG. 5 illustrates a data processing system according to an embodiment.

### DETAILED DESCRIPTION OF THE DRAWINGS

Monitoring plant responses in controlled environment agriculture can identify the plant's needs to improve its performance and the sustainability of the growing system by manipulating the climate. While chlorophyll fluorescence is ideal for such a task, its reliance on saturating light pulses restricts its application to small-scale or specialized and expensive platforms.

The inventors have addressed those main limitations of chlorophyll fluorescence monitoring by developing and a new index, termed qL', and implementing a measurement method using a low-cost chlorophyll fluorescence imager that can measure several plants simultaneously with a measurement protocol that includes controlling the lighting infrastructure, used to provide actinic light for growing the plants, in a particular way. For purpose of the measurement protocol, the lighting infrastructure may be controlled, during a measurement period, to switch OFF the actinic light and switch ON far-red light for an initial period of the measurement period.

The new index qL' is directly proportional to qL, the fraction of open reaction centers of Photosystem II (PSII), which determines in part photosynthetic efficiency over a diurnal period. The possibility to image over large temporal and spatial scales using low-cost equipment that is compatible with production settings provides a novel opportunity for monitoring and manipulating plant responses in controlled environment agriculture.

Two parameters are commonly used to describe the efficiency of photosynthetic light reactions: Φ_{PSII} and NPQ. Φ_{PSII} is a parameter that quantifies the operating efficiency of photosystem II in converting absorbed light energy into chemical energy through photochemistry and is used to calculate the electron transport rate that is used for photosynthesis (ETR). NPQ is a mechanism employed by plants to dissipate excess light energy as heat, protecting against photodamage. By characterizing these parameters, it is possible to assess the photosynthetic status of leaves under different environmental conditions and detect stress. Known methods for determining Φ_{PSII} and NPQ require light saturation pulses.

The new index qL' is based on three states of chlorophyll fluorescence that are measurable without a saturation flash: Fo, Fo' and Fs. Fo is the chlorophyll fluorescence signal measured after acclimating a leaf in the dark, preferably for at least 10 minutes, most preferably for at least 30 minutes, when all reaction centres should have reopened and NPQ relaxed. Fo' is the chlorophyll fluorescence signal of a light-adapted leaf that has been subjected to darkness. In an embodiment the light-adapted leaf may have been subjected to a combination of darkness and far-red light. Far-red is preferentially absorbed by photosystem I and is assumed to result in the rapid reopening of all reaction centres while maintaining the level of NPQ. Fs is the chlorophyll fluorescence signal of a light-adapted leaf at steady-state, where all processes in the plant are in equilibrium. The new index qL' is defined as $qL ′ = \frac{Fs - Fo ′}{Fs . Fo ′} . Fo$ (1) and therefore, can be calculated using measured chlorophyll fluorescence signals without use of saturated light pulses. The new index qL' is equivalent to $qL ′ = \frac{Fv}{Fm} \left(1-qL\right)$ (2) wherein the parameter Fv/Fm is a widely used parameter that represents the maximum quantum yield of PSII photochemistry and is often used as an indicator of plant stress, and qL is the efficiency factor of PSII (aka the estimation of the fraction of open PSII centers) as it controls the fraction of energy driving PSII photochemistry. For non-stressed leaves, the typical value of Fv/Fm is around 0.83, providing a useful benchmark for comparison between plants. Equation 2 can be explained by the decrease in maximum Φ_{PSII} that results solely from the reduction of the fraction of open reaction centers. A decrease in qL' should indicate an increase in Φ_{PSII}. A theoretical equation can also be derived to re-scale the values of qL' on the same scale as qL, based on the assumption that Fv/Fm = 0.83, which would represent the slope of the theoretical relationship between 1-qL and qL'. $qL ′ = 0.83 \left(1-qL\right)$ (3)

The index qL' is thus indicative of photosynthesis efficiency as 1-qL' is largely proportional to the known photosynthesis efficiency index Φ_{PSII}.

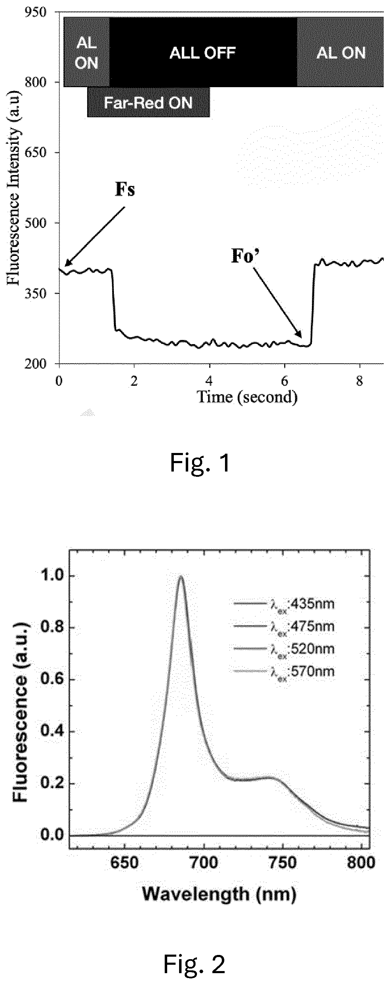

Figure 1 illustrates an example measurement protocol according to a preferred embodiment for determining qL' using equation (1). The measurement protocol can be repeated multiple times across a diurnal period to determine multiple values of the index qL' across the diurnal period. The dark-adapted ground chlorophyll fluorescence, Fo, may be measured before the start of the diurnal period, i.e., during the night before the start of the day, with actinic light OFF. The actinic light is turned ON at the start of the diurnal period. The measurement protocol starts with the recording of the steady-state chlorophyll fluorescence signal, Fs, with actinic light ON at a photosynthetic photon flux density of for example 500 µmol/m²/s, by averaging the chlorophyll fluorescence signal over for example the last 15 seconds before the start of the protocol. Following this, far-red light at a photosynthetic photon flux density of for example 25 µmol/m²/s was applied for 1 second, with actinic light ON, followed by 2 seconds with actinic light OFF. A dark period of 3.3 seconds was then applied to stabilize the chlorophyll fluorescence signal, and the light-adapted ground chlorophyll fluorescence, Fo', was recorded, for example by averaging the value of chlorophyll fluorescence over the last second of the dark period. Subsequently, the actinic light was switched back ON. The periods wherein the actinic light is switched OFF for the purpose of the Fo' measurement, is referred to herein as a measurement period. A plurality of these measurement periods may exist in a diurnal period.

The use of far-red light in the dark period during the measurement protocol is preferred as it is hypothesized to induce rapid dark acclimation in leaves and reopen all reaction centres. Far-red is preferentially absorbed by photosystem I and is assumed to result in the rapid reopening of all reaction centres, while maintaining the level of NPQ (Non-Photochemical Quenching). Not using far-red would require a longer period for dark acclimation (10 - 30 min), during which NPQ may change, impacting Fo'.

It is noted that some amount of far-red light may also be present in the actinic light, as known in the art, where it serves other purposes, such as certain morphological responses in plants, rather than reopening PSII reaction centres. A photon flux density of the weak far-red light applied substantially at an initial period in the measurement period with actinic light OFF, may range from 10 to 50 µmol/m²/s and the wavelength(s) of such far-red light may range from 700 nm to 800 nm.

The actinic light may be of any intensity and/or any spectral composition and/or any spectral power distribution suitable for growth of the plant. Such actinic light may comprise blue, green, white, red and/or far-red light as known in the art with a spectral power distribution and intensity as known in the art. Such spectral power distribution and/or intensity may change over time, e.g., within a diurnal period such as to wake up the plants or to provide specific end-of-day light, or across diurnal period to adapt the actinic light to the growth or development phase of the plants. The inventive concept disclosed herein is not relying on a specific spectral composition, spectral power distribution and/or intensity of the actinic light, but comparing qL' values over time of course requires the actinic light conditions to be taken into account as photosynthesis efficiency may change with photosynthetic photon flux density of actinic light.

Chlorophyll fluorescence of plants may be measured using an image capture device sensitive for the chlorophyll fluorescence wavelengths of plants. The image capturing device may capture such chlorophyll fluorescence from multiple leaves and/or multiple plants, resulting in a chlorophyll fluorescence image. Typical chlorophyll fluorescence emission spectra for four excitation wavelengths are shown in figure 2. The chlorophyll fluorescence emission spectra for these excitation wavelengths all seem to peak at around 685 nm. In case of excitation with deep-red light at 660 nm, a wavelength typically used in LED lighting for plants, the fluorescence spectrum will peak at around 740 nm. A long-pass filter or band-pass filter may be required to separate the fluorescence from any reflected excitation, e.g., actinic light. A suitable image capturing device may include a monochrome camera combined with a long-pass or band-pass filter as discussed.

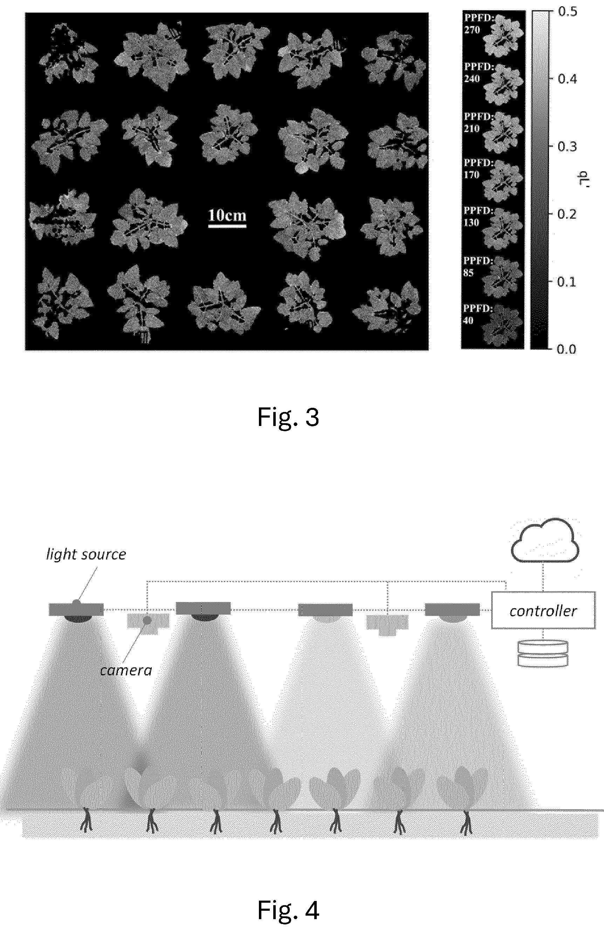

Chlorophyll fluorescence images may be captured for dark-adapted ground chlorophyll fluorescence, Fo, steady-state chlorophyll fluorescence, Fs, and light-adapted ground chlorophyll fluorescence Fo'. From these chlorophyll fluorescence images, a qL' image may be calculated by applying equation 1 using corresponding pixel values of the Fo, Fs and Fo' images to calculate a corresponding qL' pixel value. An example of a qL' image for a canopy of dwarf tomato plants is shown in figure 3 (left); the qL' values calculated at different intensities of actinic light is shown in figure 3 (right). At higher actinic light intensities, higher values for the qL' index are calculated. This is explained by the fact that the amount of photosynthesis (PPFD * Φ_{PSII}) tends to saturate at increasing PPFD levels. This implies that Φ_{PSII} decreases at increasing PPFD levels. This in turn implies that qL' increases at increasing PPFD levels, since 1-qL' is proportional to Φ_{PSII}.

If absolute values of the qL' index are not of primary interest but chlorophyll fluorescence differences between different leaves, plants or plant parts captured within the same image are of interest, any one of the three chlorophyll fluorescence images referred to above may be used. Additionally or alternatively, if absolute values of the qL' index are not of primary interest but chlorophyll fluorescence differences across multiple measurement periods or diurnal periods, any one of the three chlorophyll fluorescence images captured during multiple measurement periods or diurnal periods may be used.

A method for determining a value of the index qL' indicative of a photosynthetic efficiency of a plant as disclosed herein may include providing an image capturing device adapted to capture chlorophyll fluorescence from a sizable area of a plant canopy, the sizable area being larger than a leaf area, preferably a plurality of leaves and/or plants; controlling a lighting infrastructure for growing the plant in accordance with a measurement protocol as described above and capturing chlorophyll fluorescence in accordance with the measurement protocol using the image capturing device; and determining or calculating a qL' image from the captured chlorophyll fluorescence images using equation (1) as described above.

Another method disclosed herein is a method to maximize light-use-efficiency, LUE, of a lighting infrastructure for providing actinic light for growing a plant, the method comprising determining or calculating a value of the index qL' and adapting an intensity, a spectral distribution, a spectral power distribution and/or a timing of the actinic light provided by the lighting infrastructure based on the determined or calculated value of the index qL'.

In a further example of the above method, the method comprises determining or calculating a time series of values of the index qL' for different times across at least part of a diurnal period, and adapting an intensity, a spectral distribution, a spectral power distribution and/or a timing of the actinic light provided by the lighting infrastructure based on the time series of determined or calculated values of the index qL', for example, based on a time derivate of the determined or calculated values of the index qL'. More specifically, the intensity (expressed as photosynthetic photon flux density) of the actinic light is increased when qL' decreases and vice versa.

In another example of the above method, the method comprises providing the determined or calculated value of the index qL' to a feedback loop configured to adapt an intensity (photosynthetic photon flux density PPFD) of the actinic light so as to maximize the integral of (1-qL').PPFD over time according to the following equation: ${max}_{PPFD \left(t\right)} \int \left(1-qL′\left(t\right)\right) ⋅ PPFD \left(t\right) dt$ (4)

In a further example, maximizing the integral of (1-qL').PPFD over time is constrained by a user defined parameter, e.g., a daily light integral, DLI, target set by the user. $\int PPFD \left(t\right) dt = DLI$ (5)

Solving the above equation 4 with the constraint equation 5 for PPFD(t) may be done by trial and error. It can help to simply the problem by linearizing PPFD(t) and qL'(t) around their mean values, PPFD₀ and qL'₀, respectively: $PPFD \left(t\right) = {PPFD}_{0} + c ⋅ \left({qL}_{0}^{′}-qL′\left(t\right)\right)$ (6) wherein c is a constant, to be optimized iteratively to fulfill equations 4 and 5. For PPFD₀ and qL'₀, we take the mean value of the values of PPFD(t) and qL'(t) measured, determined or calculated during a previous time period, such as the previous hour or previous diurnal period. During the first few days, the result of these solutions will not be optimal but gradually the results will start to fulfil equations 4 and 5. The above is a heuristic approach in which we have to conjecture a simple relation between the optimal PPFD and a measured qL'. We want to have the behavior that when qL' decreases (and thus the photosynthetic efficiency increases), the PPFD applied increases, and vice versa. The simplest way is to have a linear relation, as in equation 6. Such linear relation has only two independent parameters (the slope -c and the y-axis intercept PPFD₀+c qL'₀). Having to determine only two parameters makes solving equations 4 and 5 more easy. Instead of equation 6, more complicated relations can be used (e.g., next to the linear term also introducing a quadratic term). This probably will make solving equations 4 and 5 more difficult.

In addition to, or alternatively to, the methods sketched above, the principles of these methods also allow optimizing climate related parameters such as temperature, CO₂ concentration, and humidity, as well as fertigation parameters such as EC, pH, dissolved oxygen, and nutrient composition for maximum photosynthetic efficiency.

Figure 4 shows an embodiment of a system that can be used in a method as described in the above paragraph(s) wherein values of the index qL' are used in a feedback loop to (locally) optimize the light-use-efficiency LUE, therewith also optimizing the overall light-use-efficiency LUE of the lighting infrastructure. The figure depicts a growth layer in a controlled production environment such as a vertical farm. Individually addressable lighting devices (indicated as 'light source') provide actinic light to the plants. The intensity, spectral distribution, spectral power distribution and/or timing of the actinic light can be varied locally. Cameras in combination with a controller are used to monitor the index qL'. To this end, the cameras are monochrome cameras equipped with a long-pass or band-pass filter to only pass the chlorophyl fluorescence (e.g., long-pass filter Schott RG-695, transmitting wavelengths above 695 nm). Each camera images a sizeable area of the plant canopy.

Lighting devices as referred to in the present disclosure may comprise a plurality of light sources, e.g., solid state light sources such as LEDs or lasers, each of the light sources configured to provide light of a particular color or spectrum, e.g., blue, red, green, white or far-red light. Light sources of the same color or spectrum may be controlled as a group, such group often being referred to as a (color or spectrum) channel of the lighting device. The lighting device may be adapted to provide a controllable intensity, spectrum, spectral power distribution and/or timing of light, by individually controlling and independently controlling an intensity of the light output from each of the light sources or group of light sources. The intensity of light output from a light source is controlled by a driver, e.g., an LED driver, controlling an electrical power provided to the light source, e.g., a current to the LED, based on a control signal received from a controller. Each group of light sources, e.g., each (color or spectrum) channel of the lighting device, may be controlled by its own driver(s) such that these groups are individually controllable in terms of light output. Driver(s) are typically incorporated in the lighting device.

Lighting devices are not limited to lighting devices adapted to provide the actinic light but also include lighting devices adapted to provide the far-red light used in the chlorophyll fluorescence measurement protocol described herein. In some embodiments, the light sources for providing the actinic light and the light sources for providing the far-red light may be incorporated in the same lighting device but be individually controlled, at least in terms of intensity and/or ON/OFF, e.g., as different, individually controllable channels of the same lighting device. Lighting devices or light source for providing actinic light and lighting devices or light sources for providing far-red light may be controlled by the same controller (see below).

As already mentioned above, actinic light may also comprise far-red light, in addition to well-known blue and red light suitable for plant growth. The disclosed measurement protocol may therefore include, instead of switching ON/OFF the far-red lighting device, increasing/decreasing (potentially switching OFF) the far-red light emitted by the actinic lighting device. The disclosed measurement protocol may then also include, instead of switching OFF the actinic lighting device, switching OFF only the light sources of the actinic lighting device except for the far-red light sources in the actinic lighting device. It is further noted that an intensity of the far-red light in the actinic light may be different from an intensity of the far-red light for use in the measurement protocol, due to the different effect they intend to provoke in the plants. The above control of the far-red light may therefore also include adapting the light intensity instead of switching ON/OFF.

Lighting devices are controlled by a controller or control device. A controller may comprise a processor for generating control signals for the lighting device. Such control signals may represent a desired intensity, spectrum, spectral power distribution and/or timing of the light output of the lighting device. Alternatively, such control signals may also represent a desired intensity and/or timing of the light output of a (color or spectrum) channel of the lighting device, in which case the control signals may directly provide input(s) to the driver(s) in the lighting device. A controller may be incorporated in the lighting device or may be external to the lighting device and communicatively connected to the lighting device via wired or wireless communication means as known in the art. A controller may have one ore more input/output interfaces or transceivers for communication with external devices as known in the art. A controller may be incorporated into a lighting control system controlling a plurality of lighting devices of a lighting infrastructure.

The system depicted in figure 4 includes one more image capturing device, e.g., cameras, adapted to capture images of the plants being grown. Preferably the image capturing devices have a field of view that covers a sizeable area of the plant canopy, e.g., including a plurality of plants. Monochrome cameras, RGB cameras and multispectral cameras are known in the art and are also used in horticulture applications. In the context of the present disclosure, the image capturing device is adapted to capture at least light in the wavelength range of chlorophyll fluorescence of plants. The image capturing device may be adapted to capture only light in the wavelength range of chlorophyll fluorescence of the plants, or may be adapted to also capture visible light in wavelengths suitable for reproducing for example an RGB image of the plant canopy. A long-pass or band-pass filter may be used to only pass the chlorophyll fluorescence wavelengths (e.g., long-pass filter Schott RG-695, transmitting wavelengths above 695 nm) such that a chlorophyll fluorescence image may be reproduced. The camera(s) may be communicatively connected to a controller, which may be the same controller as described above or may be a different controller, either through wired or wireless communication means, to receive instructions related to a timing of the capturing of images or related to camera settings to be used for the capturing of images, and to send chlorophyll fluorescence data to the controller. The camera may have one ore more input/output interfaces or transceivers for communication the above information with external devices as known in the art. The controller may comprise a processor configured to determine/calculate, based on the received chlorophyll fluorescence data from the camera(s), qL' values for the plants being grown. The processor may also be configured to average chlorophyll fluorescence data over time, e.g., a couple of minutes, to provide more reliable Fo, Fs and/or Fo' chlorophyll fluorescence data for further processing. The camera(s) may be incorporated in the lighting device(s) or may be separate from the lighting device(s). When incorporated in a lighting device, the field of view of the camera may cover or overlap with the area of illumination provided by the lighting device. For example, the field of view of the camera may cover an area illuminated by a plurality of lighting devices, in which case not all lighting devices need to be equipped with a camera.

In case the camera (or a plurality of cameras) is communicatively connected to a controller different from the controller to which the lighting device (or a plurality of lighting devices) is communicatively connected to, both controllers are configured to communicate with each other to synchronize a timing of capturing chlorophyll fluorescence data and a timing of the light output from the lighting devices, in accordance with the measurement protocol described above. In case the camera is incorporated in the lighting devices, the camera and the lighting device may be controlled by the same controller or control device and then such synchronization may be implemented in that controller or control device. If the lighting infrastructure comprises a plurality of controllers or control devices, e.g., associated with a plurality of corresponding lighting devices and/or cameras, these plurality of controllers or control devices may be operated, and their operation may be synchronized, by the lighting control system overseeing and managing the operation of the complete lighting infrastructure.

The chlorophyll fluorescence measurement protocol described above assumes that the chlorophyll fluorescence Fo', i.e., the light-adapted ground chlorophyll fluorescence of the plant, is measured in a dark environment with lights OFF. Although this favors use of the claimed invention in controlled, daylight-free environments such as vertical farms, the invention may also be used in greenhouse environments, provided that the chlorophyll fluorescence Fo' is measured outside daylight hours, i.e., before sunrise and/or after sunset, or is measured with screens such as black out screens closed, i.e., when the interior of the greenhouse is screened from external (day)light. Indeed, depending on the geographical location and the time of the year, the daylight for growth of plants in a greenhouse may be supplemented with artificial light before sunrise and/or after sunset to extend the day in the diurnal period. For example, the photoperiod for tomato growth is typically 18 hours and the photoperiod for cucumber growth is typically 20 hours, well beyond the duration of the period of natural daylight in the Netherlands during a substantial part of the year. Periods of no-daylight in greenhouses may therefore be conveniently used to collect light-adapted ground chlorophyll fluorescence measurements of plants and hence the claimed invention may also be practiced in greenhouses.

In a production environment for growing plants, lighting, temperature and CO₂ concentration typically cannot be controlled at the scale of individual plants. For the purpose of optimizing photosynthesis and maximizing light-use-efficiency using the chlorophyll fluorescence measurement protocol of the claimed invention, it is therefore not necessary to assess chlorophyll fluorescence at the plant level (or even leaf level) as photosynthesis and light-use-efficiency cannot be controlled at the plant level. Individually controllable climate zones in greenhouse are typically quite large, such as 0.5 ha, so that there is no benefit in using a high density of cameras in the greenhouse for the photosynthesis optimization or light-use-efficiency maximization purpose. In such use case, 1 or 2 cameras to capture representative chlorophyll fluorescence images for a climate zone may be sufficient, similar to growers currently using 1 or 2 PAR sensors to measure average light levels in a climate zone. However, chlorophyll fluorescence measurements at the plant level (or even leaf level) may reveal chlorophyll fluorescence related problems of specific plant level (or plant parts), allowing targeted intervention from a user to resolve such problems. In such cases, each lighting device may have a camera incorporated for capturing chlorophyll fluorescence.

The controller for controlling operation of the lighting device(s) and the camera(s), depicted in figure 6, is not incorporated in a lighting device and/or camera but communicatively connected to the lighting device(s) and the camera(s). As shown in figure 6, the controller may be further connected to or part of a cloud-based lighting control system for retrieving light recipes for growing the plants, e.g., predetermined light setting in terms of intensity, spectrum, spectral power distribution and/or timing of light for growth of the plants, for retrieving light and camera setting for the chlorophyll fluorescence measurement protocol, and/or for storing chlorophyll fluorescence measurement data and photosynthetic efficiency data. The controller may also be communicatively connected to a local storage or database, instead of the cloud, for retrieving and storing such data. The controller may be adapted to determine/calculate qL' values or maximize light use efficiency of actinic light using the chlorophyll fluorescence data received from the camera and/or received from a (local or cloud) storage and the equations described above. Cloud-based and/or on premise (local) lighting control systems that may be used with the claimed invention include the Philips GrowWise Control System commercially available from the applicant.

A system for implementing the claimed invention may further comprise a light sensor (or a plurality of light sensors) adapted to measure light intensities of actinic light provided to the plant(s) over time, i.e., measure PPFD(t). The one or more light sensors may be PAR sensors for measuring photosynthetic active radiation as known in the art. The one or more light sensors may be communicatively connected to one of the controllers described above to provide a time series of PPFD values to the controller for allowing the controller to perform a maximization of the light use efficiency of actinic light in accordance with the equations described above. The number and distribution of light sensors across the plant growing environment may be aligned with the number and distribution of cameras across the plant growing environment such that light intensities of actinic light may be linked to chlorophyll fluorescence images and a maximization of light-use-efficiency may be performed for a location, e.g., for a climate zone in the plant growing environment, using the camera, the light sensor and the lighting device(s) at that location. The one or more light sensors may be incorporated in the lighting devices as may be the case for the one or more cameras. Instead of using light sensors to measure light intensity of actinic light provided to the plants, alternatively, the light intensities may be retrieved from information comprised in the light recipe used for growing the plants, as described above.

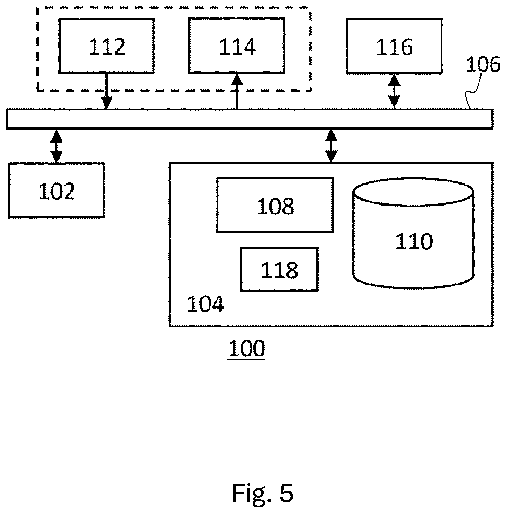

Figure 5 depicts a block diagram illustrating a data processing system that may be used to implement a controller as referred to above. For example, the controller referred to in figure 4 may be implemented as a data processing system as described herewith.

As shown in figure 5, the data processing system 100 may include at least one processor 102 coupled to memory elements 104 through a system bus 106. As such, the data processing system may store program code within memory elements 104. Further, the processor 102 may execute the program code accessed from the memory elements 104 via a system bus 106. In one aspect, the data processing system may be implemented as a computer that is suitable for storing and/or executing program code. It should be appreciated, however, that the data processing system 100 may be implemented in the form of any system including a processor and a memory that is capable of performing the functions described within this specification.

The memory elements 104 may include one or more physical memory devices such as, for example, local memory 108 and one or more bulk storage devices 110. The local memory may refer to random access memory or other non-persistent memory device(s) generally used during actual execution of the program code. A bulk storage device may be implemented as a hard drive or other persistent data storage device. The processing system 100 may also include one or more cache memories (not shown) that provide temporary storage of at least some program code in order to reduce the number of times program code must be retrieved from the bulk storage device 110 during execution.

Input/output (I/O) devices depicted as an input device 112 and an output device 114 optionally can be coupled to the data processing system. Examples of input devices may include, but are not limited to, a keyboard, a pointing device such as a mouse, a touch-sensitive display, an external control system referred to herein, or the like. Examples of output devices may include, but are not limited to, a monitor or a display, speakers, the LED driver, or the like. Input and/or output devices may be coupled to the data processing system either directly or through intervening I/O controllers.

In an embodiment, the input and the output devices may be implemented as a combined input/output device (illustrated in Figure 5 with a dashed line surrounding the input device 112 and the output device 114). An example of such a combined device is a touch sensitive display, also sometimes referred to as a "touch screen display" or simply "touch screen". In such an embodiment, input to the device may be provided by a movement of a physical object, such as, e.g., a stylus or a finger of a user, on or near the touch screen display.

A network adapter 116 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 100, and a data transmitter for transmitting data from the data processing system 100 to said systems, devices and/or networks. Modems, cable modems, and Ethernet cards are examples of different types of network adapter that may be used with the data processing system 100.

One or more network adapters may be used to communicatively connect the data processing system with imaging device(s) and/or actinic lighting device(s) and/or far-red lighting device(s) disclosed herein. Alternatively, one or more dedicated input/output (I/O) devices may connect the actinic lighting device(s) and/or far-red lighting device(s) with the data processing system to communicate control signals for controlling these device(s) according to embodiments disclosed herein. Furhter, one or more dedicated input/output (I/O) devices may connect the one or more cameras to the data processing system, wherein the one or more dedicated input/output (I/O) devices are adapted to receive images from the one or more cameras according to embodiments disclosed herein.

As pictured in figure 5, the memory elements 104 may store an application 118. In various embodiments, the application 118 may be stored in the local memory 108, the one or more bulk storage devices 110, or apart from the local memory and the bulk storage devices. It should be appreciated that the data processing system 100 may further execute an operating system (not shown in figure 5) that can facilitate execution of the application 118. The application 118, being implemented in the form of executable program code, can be executed by the data processing system 100, e.g., by the processor 102. Responsive to executing the application, the data processing system 100 may be configured to perform one or more operations or method steps described herein.

The data processing system 100 may represent a control system of a lighting system as described with reference to figure 4.

In another aspect, the data processing system 100 may represent a client data processing system. In that case, the application 118 may represent a client application that, when executed, configures the data processing system 100 to perform the various functions described herein with reference to a "client". Examples of a client can include, but are not limited to, a personal computer, a portable computer, a mobile phone, or the like.

In yet another aspect, the data processing system 100 may represent a (cloud) server. For example, the data processing system may represent an (HTTP) server, in which case the application 118, when executed, may configure the data processing system to perform (HTTP) server operations.

## Claims

1. A method for determining a value of an index, qL', indicative of a photosynthetic efficiency of a plant, the method comprising the steps of:
a. determining a dark-adapted ground chlorophyll fluorescence, Fo, of the plant ;
b. determining a steady-state chlorophyll fluorescence, Fs, of the plant ;
c. determining, during a measurement period, a light-adapted ground chlorophyll fluorescence, Fo', of the plant ; and
d. determining the value of the index, qL', indicative of the photosynthetic efficiency of the plant based on the dark-adapted ground chlorophyll fluorescence, Fo, the steady-state chlorophyll fluorescence, Fs, and the light-adapted ground chlorophyll fluorescence, Fo'.

2. The method of claim 1, wherein the step of determining the light-adapted ground chlorophyll fluorescence, Fo', of the plant further comprises controlling a far-red lighting device to irradiate the plant with far-red light immediately prior to or at a start of the measurement period and controlling the far-red lighting device to stop irradiating the plant with far-red light after an initial period in the measurement period.

3. The method of any one of claims 1 or 2, wherein
- determining the dark-adapted ground chlorophyll fluorescence, Fo, of the plant comprises capturing a first chlorophyll fluorescence image of the plant under dark-adapted plant conditions and determining the dark-adapted ground chlorophyll fluorescence, Fo, of the plant based on the first chlorophyll fluorescence image ;
- determining the steady-state chlorophyll fluorescence, Fs, of the plant comprises controlling an actinic lighting device to irradiate the plant with actinic light, capturing a second chlorophyll fluorescence image of the plant under light-adapted plant conditions, and determining the steady-state chlorophyll fluorescence, Fs, of the plant based on the second chlorophyll fluorescence image ; and
- determining the light-adapted ground chlorophyll fluorescence, Fo', of the plant comprises controlling the actinic lighting device to stop irradiating the plant with actinic light at the start of the measurement period, capturing a third chlorophyll fluorescence image under dark plant conditions at an end of the measurement period and determine the light-adapted ground fluorescence, Fo', for the plant based on the third chlorophyll fluorescence image.

4. The method of any one of the preceding claims, wherein a duration of the measurement period is between 2 and 30 seconds, preferably between 5 and 10 seconds, preferably about 7 seconds.

5. The method of any one of claim 2 to 4, wherein the initial period in the measurement period is less than half the duration of the measurement period, preferably about 3 seconds.

6. The method of any one of claims 3 to 5, wherein a photosynthetic photon flux density of the actinic light is in a range from 50 to 1500 µmol/m²/s and is selected to provide growth of the plant.

7. The method of any one of claims 2 to 6, wherein a photosynthetic photon flux density of the far-red light is in a range from 10 to 50 µmol/m²/s, preferably about 25 µmol/m²/s, and is selected to provide opening of PSII reaction centers in the plant.

8. The method of any one of the preceding claims, wherein the dark-adapted plant conditions are conditions wherein the plant is maintained in darkness for at least 30 minutes, and wherein the light-adapted plant conditions are conditions wherein the plant is maintained under actinic light conditions for at least 10 minutes, preferably at least 30 minutes.

9. The method of any one of the preceding claims, wherein the value of the index, qL', indicative of a photosynthetic efficiency of the plant is determined based on the formula ((Fs-Fo')/(Fs*Fo'))*Fo.

10. The method of any one of the preceding claims, further comprising determining a further value of the index, qL', indicative of a further photosynthetic efficiency of the plant at a further time by repeating, at or around the further time, the steps of determining a steady-state chlorophyll fluorescence, Fs, of the plant, determining a light-adapted ground chlorophyll fluorescence, Fo', of the plant, and determining a value of the index, qL', indicative of a photosynthetic efficiency of the plant.

11. A method of maximizing light use efficiency of actinic light applied to a plant, the method comprising the steps of:
- using the method of claim 10 to determine a time series of values of the index, qL'(t), indicative of a photosynthetic efficiency of the plant, at different times t during a diurnal period ;
- determining a time series of photosynthetic photon flux densities, PPFD(t), of the actinic light at the respective different times t during the diurnal period ;
- calculating the integral of (1-qL'(t))*PPDF(t)*dt over the diurnal period; and
- maximizing the integral for a next diurnal period by adapting the photosynthetic photon flux density of actinic light during the next diurnal period.

12. The method of claim 11, wherein the step of maximizing the integral is constrained by the integral of photosynthetic photon flux density of actinic light during the next diurnal period being equal to a predefined daily light integral DLI.

13. The method of claim 11, wherein the step of maximizing the integral comprises linearizing the integral with the formula PPFD(t) = PPFD₀ + c*(qL'₀ - qL'(t)), wherein PPDF₀ and qL'₀ are the mean values of PPFD(t) and qL'(t) over a preceding period such as a preceding hour or a preceding diurnal period.

14. A system for determining a value of an index, qL', representative of a photosynthetic efficiency of a plant, the system comprising:
a. an imaging device adapted to capture images of chlorophyll fluorescence from the plant ;
b. an actinic lighting device adapted to irradiate the plant with actinic light ; and
c. a data processing system in communication with the imaging device and the actinic lighting device, the data processing system comprising a processor configured to:
∘ determine a dark-adapted ground fluorescence, Fo, for the plant based on a chlorophyll fluorescence image received from the imaging device and captured under dark-adapted plant conditions ;
∘ control the actinic lighting device to irradiate the plant with actinic light;
∘ determine a steady-state fluorescence, Fs, for the plant based on a chlorophyll fluorescence image received from the imaging device and captured under light-adapted plant conditions ;
∘ control the actinic lighting device to stop irradiating the plant with actinic light at the start of a measurement period ;
∘ determine a light-adapted ground fluorescence, Fo', for the plant based on a chlorophyll fluorescence image received from the imaging device and captured at an end of the measurement period under dark plant conditions ;
∘ determine the value of the index, qL', representative of the photosynthetic efficiency of the plant based on the dark-adapted ground fluorescence, Fo, the steady-state fluorescence, Fs, and the light-adapted ground fluorescence, Fo'.

15. The system of claim 14, further comprising a far-red lighting device adapted to irradiate the plant with far-red light, the processor further configured to control the far-red lighting device to irradiate the plant with far-red light immediately prior to or at the start of the measurement period and stop irradiating the plant with far-red light after an initial period in the measurement period.

16. The system of claim 14, where the imaging device is a monochrome camera configured to capture chlorophyll fluorescence wavelengths emitted by the plant.

17. The system of any one of the claims 14 to 16, further comprising a controller for controlling a photosynthetic photon flux density and a spectral composition of the actinic lighting device and of the far-red lighting device; and wherein the processor is adapted to control the actinic lighting device and the far-red lighting device by providing control commands to the controller.

18. The system of any one of the claims 14-17, wherein the imaging device, the actinic lighting device and the far-red lighting device are integrated in a luminaire for irradiating the plant.
